# EUROPEAN PATENT APPLICATION

(11) **EP 1 564 460 A1**
(43) Date of publication of application: **17.08.2005**
(21) Application number: 04014169.9
(22) Date of filing: 17.06.2004
(51) Int. Cl.: F16K 17/10, F15B 21/04, F15B 11/028

(54) **Relief valve**

(30) Priority: 12.02.2004 KR 2004009300
(71) Applicant: Volvo Construction Equipment Holding Sweden AB, 631 85 Eskilstuna (SE)
(72) Inventor: Cheong, Hae Kyun, Sasang-gu Pusan (KR)
(74) Representative: Dr. Weitzel & Partner

(57) **Abstract**

A relief valve, filtering foreign materials contained in hydraulic fluid, is comprised of a sleeve (10) provided with a high-pressure inlet (11) and a tank fluid channel (12); a main poppet (20) provided with a back-pressure chamber (22) and fitted in the sleeve (10) so as to open/close the high-pressure inlet (11) and the tank fluid channel (12); a piston (30) provided with a piston fluid passage communicating the high-pressure inlet (11) with the back-pressure chamber (22); an annular fluid passage (60) defined by an inner wall of the poppet passage of the main poppet (20) and an outer wall of the piston (30) and communicating with the piston fluid passage; a seat (40) fitted in a rear of the main poppet (20) to support a rear end of the main poppet spring (23) and provided with a seat fluid channel (43); and a pilot poppet (50) fitted to open/close the seat fluid channel, and communicating the seat fluid channel (43) with the tank fluid channel (12).

## Description

### 1. Field of the Invention

The present invention relates to a relief valve, in which an annular fluid passage functioning as a filter is provided at an inlet of a piston fluid passage of a piston inserted in a front of a main poppet, thereby filtering foreign materials contained in hydraulic fluid to prevent them from being introduced into the relief valve.

### 2. Description of the Related Art

In general, heavy equipment such as an excavator, a payloader, a skidder, etc., which is operated with a hydraulic pressure employs a hydraulic system in order to drive various actuators mounted thereon by use of hydraulic fluid supplied from a hydraulic pump. The hydraulic system of the heavy equipment is provided with a relief valve which functions to regulate the maximum pressure in order to protect the entire hydraulic system including a driving source from an overload.

The relief valve is one of pressure control valves, which discharge a part or total of fluid when a pressure of the hydraulic system reaches a set pressure of the valve, thereby performing a function of keeping the pressure in the hydraulic system under a set value. The relief valve is capable of changing the set pressure, so that it can cope with the case of changing the actuator of the equipment.

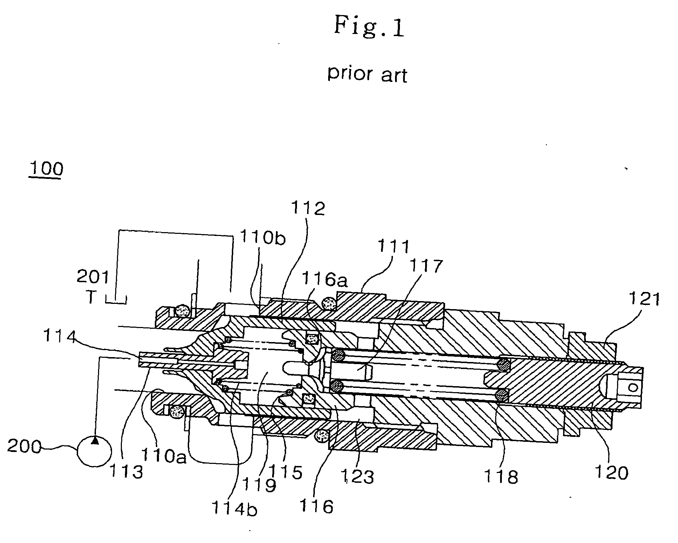

Fig. 1 illustrates a cross-sectional view of a conventional relief valve.

According to the conventional relief valve 100, hydraulic fluid is supplied from a hydraulic pump 200 to a high-pressure inlet 110a of the relief valve 100, so that the whole pressure of a hydraulic system is exerted on the high-pressure inlet 110a. The relief valve discharges the hydraulic fluid from the high-pressure inlet 110a toward a tank 201 when the pressure of the high-pressure inlet 110a reaches a predetermined pressure or more, thereby protecting the hydraulic system from an overload.

The relief valve 100 is comprised of a sleeve 111, a main poppet 112 fitted in the sleeve 111, a piston 113 fitted at a front end of the main poppet 112, a seat 116 fitted at the rear of the main poppet 112, and a pilot poppet 117.

The front end of the sleeve 111 is provided with the high-pressure inlet 110a through which the hydraulic fluid is supplied from the hydraulic pump 200, as well as a tank fluid channel 110b which returns the hydraulic fluid of the high-pressure inlet 110a to a tank 201.

The main poppet 112 is elastically supported by a main poppet spring 115, so that the high-pressure inlet 110a and the tank fluid channel 110b can be opened/closed. A piston fluid channel 114 for the piston 113 connects the high-pressure inlet 110a with a back-pressure chamber 119 disposed at the rear of the main poppet 112.

The seat 116 fitted at the rear of the main poppet 112 supports a rear end of the main poppet spring 115 and a rear end of a piston spring 114b. The seat 116 is provided with a seat fluid channel 116a, which passes through its own center and communicates with the back-pressure chamber 119.

The pilot poppet 117 is fitted to open/close the seat fluid channel 116a at the rear of the seat 116. The pilot poppet 117 is elastically supported by a pilot poppet spring 118 on its own rear end, thus moving in the sleeve 111

An adjusting piston 120 supporting the rear end of the pilot poppet spring 118 is mounted to be capable of changing its own position in the sleeve 111. Thus, user can change the setting pressure of the relief valve 100 by moving the adjusting piston 120 left or right to adjust a tension of the pilot poppet spring 118, and then fastening a fixing nut 121 to fix the adjusting piston 120 to the sleeve 111.

A tank inlet 123 connected to the tank fluid channel 110b is provided at the rear of the pilot poppet 117. When the pilot poppet 117 opens the seat fluid channel 116a, the tank inlet 123 discharges the hydraulic fluid, which has passed through the seat fluid channel 116a, toward the tank 201.

The following description will be made regarding an operation of the relief valve having the foregoing construction. The hydraulic fluid supplied from the hydraulic pump 200 to the high-pressure inlet 110a is introduced into the back-pressure chamber 119 at the rear of the main poppet 112 via the piston fluid channel 114.

When the pressure on the side of the high-pressure inlet 110a is less than that the set value of the pilot poppet spring 118, the pilot poppet 117 is placed in a state where the seat fluid channel 116a is closed. Thus, the main poppet 112 keeps the high-pressure inlet 110a and the tank fluid channel 110b in a closed state.

Meanwhile, when an actuator (not shown) of heavy equipment reaches the maximum stroke, and thus a system pressure of the equipment increases, and simultaneously the pressure on the side of the high-pressure inlet 110a increases to exceed the set pressure which is set by the pilot poppet spring 118, the pilot poppet 117 moves on the right side as seen from the Figure, and the hydraulic fluid of the back-pressure chamber 119 is discharged to the tank fluid channel 110b via the seat fluid channel 116a.

At this point, the hydraulic fluid is compensated by the piston fluid channel 114 in the back-pressure chamber 119. Thus, as the hydraulic fluid flows through the piston fluid channel 114, a pressure loss is generated, and thus a pressure difference is generated between the side of the back-pressure chamber 119 and the front side of the piston 113. Because of this pressure difference, the main poppet 112 moves right, so that the high-pressure inlet 110a communicates with the tank fluid channel 110b.

It is well known that failures occurring at hydraulic equipment are, for the most part, responsible for contamination of the oil used as the hydraulic fluid. The hydraulic fluid circulating the interior of the hydraulic system contains foreign materials such as dust, air, etc. For instance, fine particulates such as dusts block drain openings or fluid channels, thus resulting from malfunction. In addition, the foreign materials such as molding sands are introduced into a pressure chamber of the relief valve, thus obstructing operation of the main poppet or causing damage to the seat.

According to the conventional relief valve 100, the passage, through which the hydraulic fluid of the high-pressure inlet 110a is introduced into the back-pressure chamber 119 at the rear of the main poppet 112, is formed by the piston fluid channel 114, which is provided at the center of the piston 113 fitted at the front end of the main poppet 112. For this reason, a flow rate is severely fluctuated as a viscosity of the hydraulic fluid is changed due to a change of temperature of the season when the hydraulic equipment is used. Further, the foreign materials contained in the hydraulic fluid are introduced into the interior of the relief valve, so that operation of the relief valve is deteriorated.

In order to solve the problem caused by the foreign materials contained in the hydraulic fluid, a tank filter is fitted on the entry portion of the hydraulic pump, or an oil filter functioning as a line filter is fitted in the pipes of the hydraulic pump. Nevertheless, many foreign materials are still contained in the hydraulic fluid. Furthermore, the oil filter used in the hydraulic system is expensive, which acts as a cause of increasing production costs as well as the number of parts.

### SUMMARY OF THE INVENTION

To solve the foregoing problems, the present invention is directed to force the hydraulic fluid supplied to a relief valve to pass through an annular fluid passage, thereby preventing foreign materials contained in the hydraulic fluid from being introduced into the relief valve.

To achieve the above objective, the present invention provides a relief valve where an inlet of a piston fluid passage communicating a high-pressure inlet with a back-pressure chamber is formed of an annular fluid passage.

The relief valve according to the present invention is comprised of a sleeve provided with a high-pressure inlet to which hydraulic fluid is supplied from a pump, and a tank fluid channel through which the hydraulic fluid of the high-pressure inlet is returned to a tank. A main poppet is provided with a back-pressure chamber communicating with the high-pressure inlet in a rear thereof, is elastically supported by a main poppet spring, and is fitted in the sleeve so as to open/close the high-pressure inlet and the tank fluid channel. A piston is provided with a piston fluid passage communicating the high-pressure inlet with the back-pressure chamber, and is slidably inserted in a poppet passage provided on a front end of the main poppet. An annular fluid passage is defined by an inner wall of the poppet passage of the main poppet and an outer wall of the piston, and communicates with the piston fluid passage. A seat is fitted in a rear of the main poppet to support a rear end of the main poppet spring and is provided with a seat fluid channel communicating with the back-pressure chamber. And, a pilot poppet is elastically supported by a pilot poppet spring, is fitted to open/close the seat fluid channel, and communicates the seat fluid channel with the tank fluid channel.

Preferably, the piston fluid passage includes a vertical passage which passes through the piston in a substantially vertical direction and communicates with the annular fluid passage, and a central passage which branches off from the vertical passage to be provided at a longitudinal center of the piston. The annular fluid passage has a width less than a diameter of the vertical passage.

Further, the piston fluid passage includes a recess which is formed on the piston in a longitudinal direction, wherein the recess includes a front end communicating with the annular fluid passage and a rear end communicating with the back-pressure chamber.

Here, the piston has a front end protruded by a predetermined length toward the front of the main poppet.

### BRIEF DESCRIPTION OF THE DRAWINGS

The above objects, features and advantages of the present invention will become more apparent from the following detailed description when taken in conjunction with the accompanying drawings, in which:
Fig. 1 illustrates a cross-sectional view of a conventional relief valve;
Fig. 2 illustrates a side cross-sectional view of a relief valve according to a first embodiment of the present invention;
Fig. 3 is a partially magnified view of a relief valve according to the first embodiment of the present invention;
Fig. 4 is a partially magnified view of a relief valve according to a second embodiment of the present invention; and
Fig. 5 is a partially magnified view of a relief valve according to a third embodiment of the present invention.

### DETAILED DESCRIPTION OF THE PREFERRED EMBODIMENT

A preferred embodiment of the present invention will now be described with reference to the accompanying drawings. In the following description, same drawing reference numerals are used for the same elements even in different drawings. The matters defined in the description such as a detailed construction and elements of a circuit are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

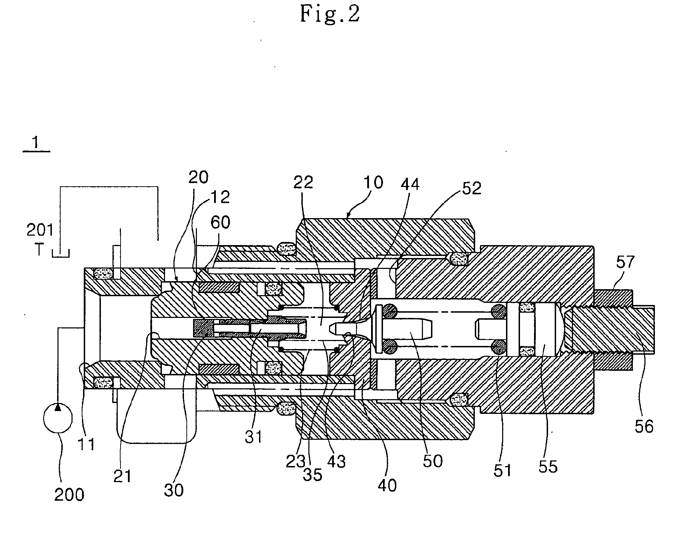

Fig. 2 illustrates a side cross-sectional view of a relief valve 1 according to a first embodiment of the present invention.

The relief valve 1 is comprised of a sleeve 10, a main poppet 20 which is movably fitted in the sleeve 10, a piston 30 which is inserted in the front of the main poppet 20, an annular fluid passage 60, a seat 40 which is fitted in the rear of the main poppet 20, and a pilot poppet 50.

The relief valve 1 is provided with a high-pressure inlet 11 through which hydraulic fluid is supplied from a hydraulic pump 200, and the main poppet 20 which opens/closes a tank fluid channel 12 connected to a tank 201. When a pressure of the high-pressure inlet 11 exceeds a set pressure of the relief valve, the main poppet 20 discharges the hydraulic fluid of the high-pressure inlet 11 toward the tank 201. Thereby, the relief valve functions to keep a pressure of an entire hydraulic system under a given value.

A front end of the sleeve 10 is provided with the high-pressure inlet 11 through which the hydraulic fluid of the hydraulic pump 200 is supplied, and the tank fluid channel 12. The tank fluid channel 12 is connected with the high-pressure inlet 11 so as to discharge the hydraulic fluid of the high-pressure inlet 11 toward the tank 201.

The main poppet 20 is elastically supported by a main poppet spring 23, and is movably fitted in the sleeve 10 so that the high-pressure inlet 11 and the tank fluid channel 12 can be opened/closed. As seen from the Figure, when the main popppet 20 moves to the left side, a front end of the main poppet 20 blocks connection between the high-pressure inlet 11 and the tank fluid channel 12. However, when the main popppet 20 moves to the right side, the high-pressure inlet 11 is connected with the tank fluid channel 12, so that the hydraulic fluid is discharged from the high-pressure inlet 11 to the tank fluid channel 12.

The front end of the main poppet 20 is provided with a poppet passage 21. The poppet passage 21 is provided with a back-pressure chamber 22 in the rear thereof. A rear end of the main poppet 20 is elastically supported by the main poppet spring 23, so that the main poppet 20 is movable in the sleeve 10.

The piston 30 is slidably inserted in the poppet passage 21 of the main poppet 20. A rear end of the piston 30 is elastically supported by a piston spring 35. A piston fluid passage 31 is formed in the piston 30, thus functioning to communicate the high-pressure inlet 11 with the back-pressure chamber 22.

The seat 40 is fitted in the rear of the main poppet 20, thus stably supporting rear ends of the main poppet spring 23 and the piston spring 35. A seat fluid channel 43 is formed in the front and rear of the seat 40, wherein the front is communicated with the back-pressure chamber 22. A rear end of the seat 40 is provided with a seat surface 44 extending from the seat fluid channel 43 to the outside. The rear of the seat 40 is provided with a tank inlet 52 communicated with the tank fluid channel 12. Thus, the sleeve 10 is formed with a fluid channel therein, wherein the fluid channel allows the hydraulic fluid from the high-pressure inlet 11 to pass through the piston fluid passage 31, the back-pressure chamber 22, the seat fluid channel 43 and the tank inlet 52.

The pilot poppet 50 is elastically supported by a pilot poppet spring 51 and movably fitted in the sleeve 10.

The pilot poppet 50 has a front end that is formed in a conical shape and is pressurized by a spring force of the pilot poppet spring 51. Hence, the pilot poppet 50 is brought into contact with the seat surface 44 of the seat 40, thus opening/closing the seat fluid channel 43. In this manner, the pilot poppet 50 opens/closes the seat fluid channel 43, thereby functioning to open/close the seat fluid channel 43 and the tank inlet 52.

A rear end of the pilot poppet 50 is supported by a movable piston 55 which is movably fitted in the sleeve 10. At the rear end of the movable piston 55, an adjustable piston 56 is fixed to the sleeve 10 by a fixing nut 47. Thus, by positioning the adjustable piston 56 relative to the sleeve on the left and right side, adjusting a tensile force of the pilot poppet spring 51, fixing the adjustable piston 56 by mean of the fixing nut 57, and setting a position of the movable piston 55, a compressed state of the pilot poppet spring 51 is constantly maintained. Thus, the set pressure of the relief valve 1 is set to a desired pressure.

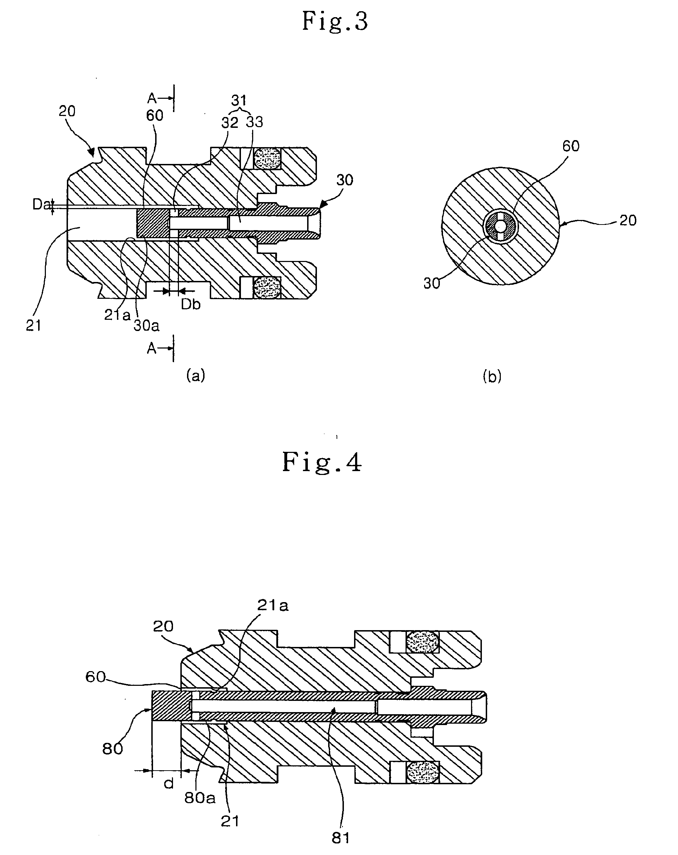

The annular fluid passage 60 is provided between the piston 30 and the main poppet 20, and functions as an inlet of the piston fluid passage 31. Fig. 3 is a partially magnified view of a relief valve according to the first embodiment of the present invention, and particularly, Fig. 3(a) is a side cross-section view, and Fig. 3(b) is a front cross-sectional view taken along line A-A. Hereinafter, configurations of the annular fluid passage 60 and the piston fluid passage 31 will be described in detail with reference to the Figures.

The annular fluid passage 60 is provided in the front of the piston 30 so as to communicate with the piston fluid passage 31, and is defined by an inner wall 21 a of the poppet passage 21 of the main poppet 20 and an outer wall 30a of the piston 30. Further, the piston fluid passage 31 is comprised of a vertical passage 32 which passes through the piston 30 in a substantially vertical direction, and a central passage 33 which branches off from the vertical passage 32 to be provided at the longitudinal center of the piston 30.

The vertical passage 32 is communicated with the annular fluid passage 60, and a rear end of the central passage 33 is communicated with the back-pressure chamber 22. Thus, the high-pressure inlet 11 and the back-pressure chamber 22 are connected with each other by the piston fluid passage 31. Here, a width Da of the annular fluid passage 60 is preferably less than a diameter Db of the vertical passage 32.

The hydraulic fluid on the side of the high-pressure inlet 11 passes through the annular fluid passage 60 when being introduced through the piston fluid passage 31 into the back-pressure chamber 22 in the rear of the main poppet 20. For this reason, when the hydraulic fluid passes through the annular fluid passage 60 having the width Da less than the diameter Db of the vertical passage 32, the foreign materials contained in the hydraulic fluid do not pass through the annular fluid passage 60. In other words, the annular fluid passage 60 performs a function as a filter, so that the annular fluid passage 60 does not allow the foreign materials contained in the hydraulic fluid to be introduced into the relief valve, thus protecting the relief valve 1.

Fig. 4 is a partially magnified view of a relief valve according to a second embodiment of the present invention. Similar to the foregoing first embodiment, in the relief valve according to the second embodiment of the present invention, a piston 80 is slidably inserted in the poppet passage 21 which is provided in the front of the main poppet 20, and a piston fluid passage 81 provided in the piston 80 is equally configured to that of the first embodiment. Further, as in the foregoing first embodiment, the annular fluid passage 60 is defined by the inner wall 21 a of the poppet passage 21 and an outer wall 80a of the piston.

The second embodiment is different from the first embodiment in that a front end of the piston 80 fitted in the poppet passage 21 is protruded by a predetermined length d toward the front of the main poppet 20. However, both embodiments are equal to each other in that the annular fluid passage 60 provided between the piston 80 and the main poppet 20 functions as an inlet of the piston fluid passage 81, and that the annular fluid passage 60 performs a function as a filter so as not to allow the foreign materials contained in the hydraulic fluid to pass through itself, thus preventing the foreign materials from being introduced into the relief valve.

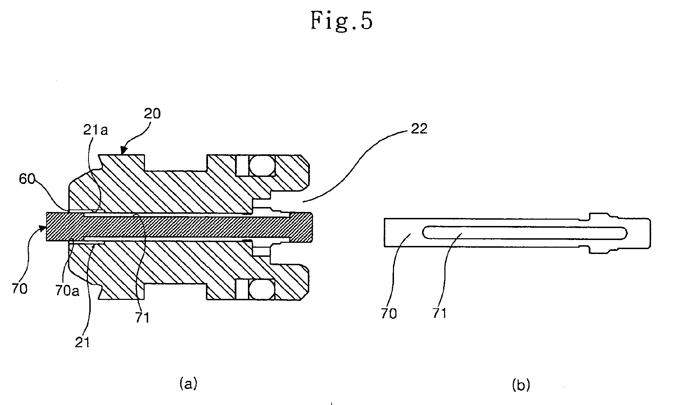

Fig. 5 is a partially magnified view of a relief valve according to a third embodiment of the present invention, wherein Fig. 5(a) is side cross-sectional view, and Fig. 5(b) is a plan view of the piston 70 shown in Fig. 5(a).

Similar to the foregoing first embodiments, in the relief valve according to the third embodiment of the present invention, a piston 70 is slidably inserted in the poppet passage 21 which is provided in the front of the main poppet 20. Further, as in the foregoing first embodiment, the annular fluid passage 60 is defined by the inner wall 21 a of the poppet passage 21 and an outer wall 70a of the piston.

However, a piston fluid passage 71 formed in the piston 70 includes a recess which is formed on the piston 70 in a longitudinal direction. The recess is communicated with the annular fluid passage 60 on its front end, and with the back-pressure chamber on its rear end, thus functioning as the piston fluid passage 71 connecting the back-pressure chamber 22 and the high-pressure inlet 11 with each other.

Similar to the first embodiment, the annular fluid passage 60 provided between the piston 70 and the main poppet 20 functions as an inlet of the piston fluid passage 71, and performs a function as a filter so as not to allow the foreign materials contained in the hydraulic fluid to pass through itself, thus preventing the foreign materials from being introduced into the relief valve. Thereby, the annular fluid passage 60 protects the relief valve.

According to the relief valve of the present invention as set forth above, the annular fluid passage functioning as the filter is provided at the inlet of the piston fluid passage of the piston inserted in the front of the main poppet. While the hydraulic fluid of the high-pressure inlet is introduced into the relief valve via the annular fluid passage, the foreign materials contained in the hydraulic fluid are filtered to fail to flow into the relief valve, so that the relief valve is smoothly operated and protected.

While the invention has been shown and described with reference to certain preferred embodiments thereof, it will be understood by those skilled in the art that various changes in form and details may be made therein without departing from the spirit and scope of the invention as defined by the appended claims.

## Claims

1. A relief valve comprising:
a sleeve provided with a high-pressure inlet to which hydraulic fluid is supplied from a pump, and a tank fluid channel through which the hydraulic fluid of the high-pressure inlet is returned to a tank;
a main poppet provided with a back-pressure chamber communicating with the high-pressure inlet in a rear thereof, elastically supported by a main poppet spring, and fitted in the sleeve so as to open/close the high-pressure inlet and the tank fluid channel;
a piston provided with a piston fluid passage communicating the high-pressure inlet with the back-pressure chamber and slidably inserted in a poppet passage provided on a front end of the main poppet;
an annular fluid passage defined by an inner wall of the poppet passage of the main poppet and an outer wall of the piston and communicating with the piston fluid passage;
a seat fitted in a rear of the main poppet to support a rear end of the main poppet spring and provided with a seat fluid channel communicating with the back-pressure chamber; and
a pilot poppet elastically supported by a pilot poppet spring, fitted to open/close the seat fluid channel, and communicating the seat fluid channel with the tank fluid channel.

2. The relief valve as set forth in claim 1, wherein the piston fluid passage includes a vertical passage which passes through the piston in an substantially vertical direction and communicates with the annular fluid passage, and a central passage which branches off from the vertical passage to be provided at a longitudinal center of the piston; and the annular fluid passage has a width less than a diameter of the vertical passage.

3. The relief valve as set forth in claim 1, wherein the piston fluid passage includes a recess which is formed on the piston in a longitudinal direction, the recess including a front end communicating with the annular fluid passage and a rear end communicating with the back-pressure chamber.

4. The relief valve as set forth in claim 1, wherein the piston has a front end protruded by a predetermined length toward the front of the main poppet.

5. The relief valve as set forth in claim 2, wherein the piston has a front end protruded by a predetermined length toward the front of the main poppet.

6. The relief valve as set forth in claim 3, wherein the piston has a front end protruded by a predetermined length toward the front of the main poppet.
